# EUROPÄISCHE PATENTANMELDUNG

(11) **EP 2 282 185 A1**
(43) Veröffentlichungstag der Anmeldung: **09.02.2011**
(21) Anmeldenummer: 10169000.6
(22) Anmeldetag: 09.07.2010
(51) Int. Cl.: G01G 13/00, G01G 13/08, G01G 15/00, G01G 19/00, G01G 13/295, B07C 5/04, B07C 5/16

(54) **Verfahren und Vorrichtung zum näherungsweisen Wiegen eines Gegenstands**

(30) Priorität: 29.07.2009 DE 102009035107
(71) Anmelder: Siemens Aktiengesellschaft, 80333 München (DE)
(72) Erfinder: Hösch, Dieter, 78464, Konstanz (DE)

(57) **Zusammenfassung**

Die Erfindung betrifft eine Vorrichtung und ein Verfahren für die automatische Entscheidung, ob die Masse eines Gegenstands innerhalb eines vorgegebenen Masse-Bereichs liegt oder nicht. Die lösungsgemäße Vorrichtung umfasst eine Waage (1), eine weitere Messeinrichtung (2), einen ersten Transportpfad (T1), einen zweiten Transportpfad (T2), einen Verzweigungspunkt (3) und eine Auswerte- und Steuerungseinheit (5). Die weitere Messeinrichtung (2) misst, welchen Wert mindestens eine weitere physikalische Messgröße für den Gegenstand annimmt. Die Vorrichtung leitet den Gegenstand entweder in den ersten Transportpfad (T1) mit der Waage (1) oder in den zweiten Transportpfad (T2). Die Vorrichtung führt dann, wenn der Messgrößen-Wert außerhalb des vorgegebenen Mess-Bereichs liegt, folgendes durch: Der erste Transportpfad (T1) transportiert den Gegenstand zur Waage (1). Die Waage (1) wiegt den Gegenstand. Ansonsten führt die Vorrichtung folgende Schritte durch: Der zweite Transportpfad (T2) transportiert den Gegenstand an der Waage (1) vorbei. Die Auswerte- und Steuerungseinheit (5) entscheidet, dass die Masse des Gegenstands im vorgegebenen Masse-Bereich liegt.

## Beschreibung

Die Erfindung betrifft eine Vorrichtung und ein Verfahren für die automatische Entscheidung, ob die Masse eines Gegenstands innerhalb eines vorgegebenen Masse-Bereichs liegt oder nicht.

In der Regel hängt das Beförderungsentgelt zum Transport eines Gegenstands von dessen Gewicht ab. Bekannt ist das Vorgehen, den Gegenstand zu wiegen und das Beförderungsentgelt abhängig von der gemessenen Masse zu bestimmen. Eine Waage misst die Auslenkung oder die Kraft, die der Gegenstand bewirkt bzw. ausübt.

Jedoch erfordert das Wiegen eine bestimmte Zeitspanne, weil die Waage sich auspendeln muss, ehe sie einen zuverlässigen Messwert liefert. Verschiedene Verfahren wurden vorgestellt, um diesen Nachteil zu kompensieren.

In US 6107579 wird ein Verfahren beschrieben, bei dem mehrere Waagen parallel arbeiten. Die zu wiegenden Gegenstände werden auf mindestens zwei parallele Transportpfade verteilt. In jedem Transportpfad befindet sich eine Waage. Die Transportpfade laufen in einem Vereinigungspunkt wieder zusammen. Dadurch wird erreicht, dass der Durchsatz durch die Vorrichtung um fast N-mal größer ist als der Durchsatz durch eine einzelne Waage, wobei N die Anzahl der parallel arbeitenden Waagen ist.

Außerdem wurden wiederholt Verfahren beschrieben, um den Gegenstand indirekt zu messen. Bei diesen Verfahren wird jeweils mindestens eine andere Messgröße gemessen, um Zeit einzusparen, und aus diesem Messergebnis wird das Gewicht berechnet.

In US 2004/0173386 A1 wird vorgeschlagen, das Format einer Postsendung zu messen und aus dem gemessenen Format die Masse zu berechnen.

Eine Vorrichtung mit den Merkmalen des Oberbegriffs des Anspruchs 1 und ein Verfahren mit den Merkmalen des Oberbegriffs des Anspruchs 4 sind aus DE 10 2007 044419 A1 bekannt.

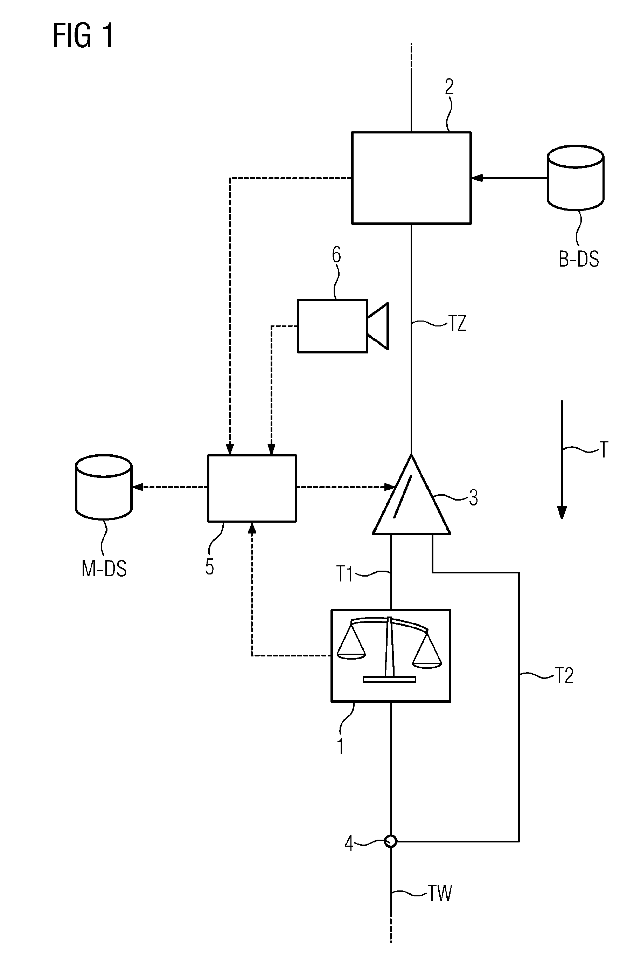

In DE 10 2007 044419 A1 wird eine Vorrichtung zum Verarbeiten flacher Gegenstände (Postsendungen 18) beschrieben. Diese Vorrichtung besitzt zwei Wiegeeinrichtungen 2, 3. Jede Wiegeeinrichtung 2, 3 besitzt eine Waage 7, einen Verzweigungspunkt 4a bzw. 4b, einen Teilpfad 5, einen Teilpfad 6 und eine Vereinigungseinrichtung 8a bzw. 8b, vgl. Fig. 1. Jeder Teilpfad 5 führt vom Verzweigungspunkt 4a, 4b zur Waage 7 und von der Waage 7 zu Vereinigungseinrichtung 8a, 8b. Jeder Teilpfad 6 führt vom Verzweigungspunkt 4a, 4b an der Waage 7 vorbei direkt zur Vereinigungseinrichtung 8a, 8b. Jede Waage 7 ist dazu ausgestaltet, einen flachen Gegenstand 18 zu wiegen.

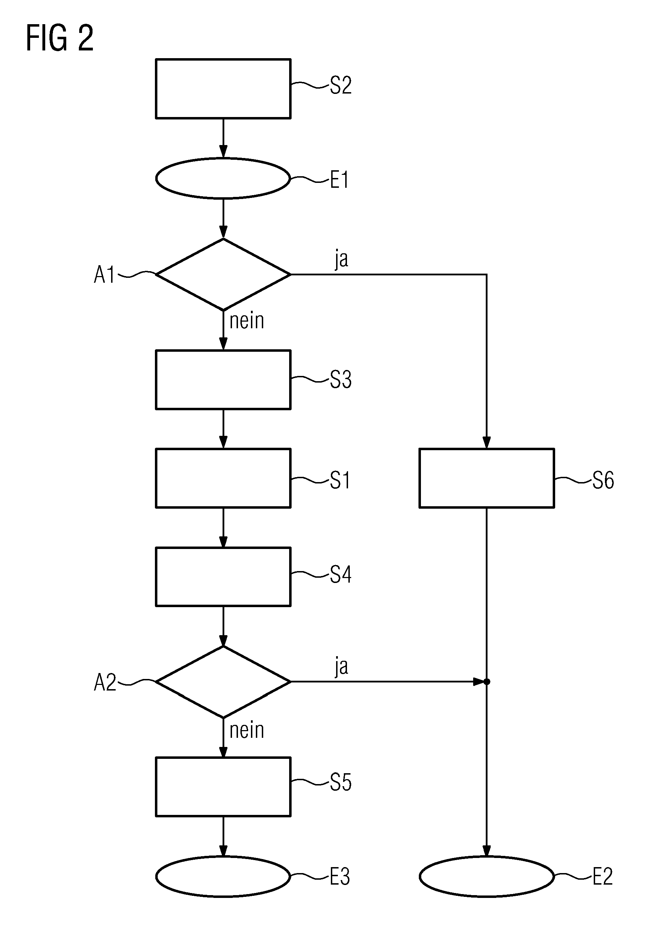

Bei dem in US 7,162,459 B2 beschriebenen Verfahren wird das Volumen einer Postsendung gemessen. Aus diesem Volumen und einer vorgegebenen Dichte für Papier wird die Masse der Postsendung berechnet. Jedoch tritt das Problem auf, dass manch eine Postsendung nicht nur aus Papier besteht, sondern z. B. eine Scheckkarte oder ein Nummernschild enthält. Daher werden das Volumen und eine weitere Messgröße gemessen, z. B. die Biegesteifigkeit oder eine geometrische Messgröße für die "dimensional uniformity" der Postsendung oder auch elektromagnetische Eigenschaften der Postsendung in einem vorgegebenen Magnetfeld. Falls die weitere Messgröße eine Anomalie der Postsendung zeigt, so wird die Postsendung gesondert behandelt. Ansonsten wird das Gewicht aus dem Volumen und der Dichte von Papier berechnet. Eine Entscheidungseinheit ("controller 20") entscheidet, ob die Postsendung nur aus Papier besteht oder Komponenten aus anderen Materialien aufweist. Eine Postsendung nur aus Papier wird auf einen Pfad 26 geleitet, der zu einem Drucker 16 führt, vgl. Fig. 2. Eine andere Postsendung wird in einen Pfad 28 ausgeschleust.

In DE 4221539 B4 wird eine Waageeinrichtung mit einem Validierungs-Referenzkanal beschrieben. Diese Vorrichtung besitzt eine Messdose 12 und eine Referenz-Messdose 22, wobei die Referenz-Messdose 22 parallel zur Messdose 12 geschaltet ist. Die Messwerte der Messdose 12 gelangen in einen Tiefpassfilter 16 mit einer Abschneidefrequenz von 10 Hz. Die Messwerte der Referenz-Messdose 12 werden an zwei parallel geschaltete Tiefpass-Filter 26 und 28 mit Abschneidefrequenzen von 10 Hz bzw. 0,1 Hz geschickt.

In EP 0373972 B1 wird eine Vorrichtung zum Verarbeiten von flachen Postsendungen beschrieben. Eine Waage 28 wiegt jede Postsendung. Geprüft wird, ob die Postsendung bereits frankiert ist (Schritt 1006 von Fig. 2). Falls nicht, so wird ein Freimachungsvermerk aufgedruckt (Schritt 1010). Falls ja, so wird geprüft, ob der vorhandene Freimachungsvermerk ausreicht oder nicht (Schritt 1018), wofür das gemessene Gewicht der Postsendung verwendet wird.

Der Erfindung liegt die Aufgabe zugrunde, eine Vorrichtung mit den Merkmalen des Oberbegriffs des Anspruchs 1 und ein Verfahren mit den Merkmalen des Oberbegriffs des Anspruchs 4 bereitzustellen, bei dem sowohl vermieden wird, jeden Gegenstand wiegen zu müssen, als auch die Notwendigkeit vermieden wird, zwei weitere Messgrößen zu messen.

Die Aufgabe wird durch eine Vorrichtung mit den Merkmalen des Anspruchs 1 und ein Verfahren mit den Merkmalen des Anspruchs 4 gelöst. Vorteilhafte Ausgestaltungen sind in den Unteransprüchen angegeben.

Die lösungsgemäße Vorrichtung umfasst
- eine Waage,
- eine weitere Messeinrichtung,
- einen ersten Transportpfad,
- einen zweiten Transportpfad,
- einen Verzweigungspunkt und
- eine Auswerte- und Steuerungseinheit.

Sowohl der erste Transportpfad als auch der zweite Transportpfad zweigen vom Verzweigungspunkt ab.

Die weitere Messeinrichtung ist dazu ausgestaltet zu messen, welchen Wert mindestens eine weitere physikalische Messgröße für den Gegenstand annimmt. Diese weitere Messgröße hängt mit der Masse zusammen. Die Vorrichtung ist dazu ausgestaltet, den Gegenstand zum Verzweigungspunkt zu transportieren und entweder in den ersten Transportpfad oder in den zweiten Transportpfad zu leiten.

Die Waage befindet sich im ersten Transportpfad (T1). Die Waage ist dazu ausgestaltet, den Gegenstand zu wiegen.

Die Auswerte- und Steuerungseinheit ist dazu ausgestaltet zu entscheiden, ob der gemessene Wert der weiteren Messgröße innerhalb oder außerhalb eines vorgegebenen Mess-Bereichs liegt.

Die Vorrichtung ist dazu ausgestaltet, dann, wenn der Messgrößen-Wert außerhalb des vorgegebenen Mess-Bereichs liegt, die folgenden beiden Schritte durchzuführen:
- Der erste Transportpfad transportiert den Gegenstand zur Waage.
- Die Waage wiegt den Gegenstand.

Die Vorrichtung ist dazu ausgestaltet, dann, wenn der Messgrößen-Wert innerhalb des vorgegebenen Mess-Bereichs liegt, die folgenden beiden Schritte durchzuführen:
- Der zweite Transportpfad transportiert den Gegenstand an der Waage vorbei.
- Die Auswerte- und Steuerungseinheit entscheidet, dass die Masse des Gegenstands im vorgegebenen Masse-Bereich liegt.

Dann, wenn der Messgrößen-Wert also innerhalb des vorgegebenen Messbereichs liegt, wird der Gegenstand nicht gewogen.

Für jeden Gegenstand wird gemessen, welchen Wert die weitere Messgröße für diesen Gegenstand annimmt. Die weitere Messgröße hängt von der Masse ab. Beispielsweise besteht ein physikalischer Zusammenhang zwischen der Masse und der weiteren Messgröße. Jedoch überlagern oft Störgrößen, sonstige externe Einflüsse und Messungenauigkeiten die Messung der weiteren Messgröße, so dass es nicht genau genug wäre, die weitere Messgröße zu messen und für jeden Gegenstand die Masse aus dem Wert der weiteren Messgröße und dem funktionalen Zusammenhang zu berechnen.

Lösungsgemäß werden nur solche Gegenstände exakt gewogen, die außerhalb eines vorgegebenen Mess-Bereichs sind, was in der Regel daran liegt, dass sie besonders schwer und/oder besonders leicht sind. Für die übrigen Gegenstände wird automatisch entschieden, dass die jeweilige Masse der übrigen Gegenstände im vorgegebenen Masse-Bereich liegt und ein präzises und daher zeitaufwendiges Wiegen nicht nötig ist.

Dank der Erfindung braucht nicht jeder Gegenstand exakt gewogen zu werden. Die Erfindung zeigt einen Weg auf, um auf eine nachvollziehbare Weise automatisch zu entscheiden, welche Gegenstände exakt gewogen werden und welche nicht. Diese Entscheidung, ob ein Gegenstand gewogen oder an der Waage vorbeitransportiert wird, hängt von einer physikalischen Eigenschaft des Gegenstands selber ab und vorzugsweise nicht von einer Verarbeitungskapazität oder Auslastung einer anderen Vorrichtung.

Die Gegenstände können in beliebiger Reihenfolge den Verzweigungspunkt erreichen. Nicht erforderlich ist es, die Gegenstände vorzusortieren, bevor sie den Verzweigungspunkt erreichen.

Dank der Erfindung ist es nicht erforderlich, so wie in US 7,162,459 B2 beschrieben zwei weitere Messgrößen zu messen, z. B. zusätzlich zum Volumen die Biegesteifigkeit oder das Verhalten des Gegenstands in einem elektromagnetischen Feld. Die gemessene weitere Messgröße hängt mit der gesuchten Masse des Gegenstands zusammen. Zugleich wird lösungsgemäß sichergestellt, dass nur die relevanten Gegenstände, in der Regel also die besonders schweren und/oder leichten Gegenstände, präzise gewogen werden. Deren jeweiliges Gewicht wird also exakt und nicht nur indirekt aufgrund der weiteren Messgröße bestimmt.

Beispielsweise beim Wiegen von Postsendungen tritt oft die Anforderung auf, dass eine bestimmte Anzahl von Gegenständen pro Zeiteinheit zu verarbeiten ist, also ein bestimmter Durchsatz zu erzielen ist. Eine einzige Waage erzielt nicht diesen Durchsatz. Um alle Postsendungen zu wiegen, muss man entweder mehrere Waagen parallel schalten, z. B. so wie in US 6,107,579 beschrieben, oder mehrere Waagen und Umgehungsstrecken in Reihe schalten, z. B. so wie in DE 10 2007 044419 A1 beschrieben. Beide Ansätze erfordern mehrere Waagen. Dank der Erfindung spart man mindestens eine Waage ein, weil die lösungsgemäße Vorrichtung nur eine Waage aufzuweisen braucht.

Die lösungsgemäße Vorrichtung lässt sich insbesondere für die Überprüfung einsetzen, ob das Beförderungsentgelt, das tatsächlich entrichtet wurde, zum Transport eines Gegenstands ausreicht, und zwar auch dann, wenn es sich nicht lohnt oder zu viel Zeit kosten würde, jeden Gegenstand zu wiegen. Dank der Erfindung wird das zeitaufwendige Wiegen nur für solche Gegenstände durchgeführt, die nach der Messung der weiteren Messgröße "auffallen".

Die Erfindung zeigt einen Kompromiss zwischen den beiden Anforderungen auf,
- die Überprüfung des entrichteten Beförderungsentgelts rasch durchzuführen und
- für möglichst viele Gegenstände das vollständige Beförderungsentgelt zu erhalten.

Möglich ist, dass die Vorrichtung einen Zuführ-Transportpfad aufweist, der im Verzweigungspunkt endet. Sowohl der erste Transportpfad, der zur Waage führt, als auch der zweite Transportpfad, der an der Waage vorbei führt, zweigen vom Verzweigungspunkt ab. Möglich ist auch, dass der Verzweigungspunkt im ersten Transportpfad liegt und somit der zweite Transportpfad vom ersten Transportpfad abzweigt.

Die Waage kann mehrere parallel geschaltete Waagezellen umfassen, so wie dies aus US 6107579 bekannt ist.

Vorzugsweise hängt die weitere Messgröße monoton mit der Masse zusammen, d. h. je größer die Masse eines Gegenstands ist, desto größer ist auch der Wert, den die weitere Messgröße für diesen Gegenstand annimmt. Dieser Zusammenhang gilt wenigstens empirisch und wenigstens für eine bestimmte Art von Gegenständen, z. B. für Postsendungen oder für bestimmte Werkstücke, insbesondere wenn alle Gegenstände dieser Art im Wesentlichen aus einem Material gefertigt sind.

In einer Ausgestaltung erfordert die Messung der weiteren Messgröße weniger Zeit als die Messung des Gewichts. Daher spart es Zeit ein, nur einen Teil der Gegenstände zu wiegen. Vorzugsweise erfordert es sogar weniger Zeit, für jeden Gegenstand die weitere Messgröße zu messen und nur einige Gegenstände zu wiegen, als alle Gegenstände zu wiegen.

In einer Ausgestaltung wird der Mess-Bereich fest vorgegeben und ist für alle Gegenstände gleich. In einer anderen Ausgestaltung wird zunächst ermittelt, welches Beförderungsentgelt tatsächlich für den Transport eines Gegenstands entrichtet wurde. Beispielsweise wird der Nennwert einer Briefmarke auf einer Postsendung oder ein sonstiger Hinweis auf ein Beförderungsentgelt, mit dem die Postsendung versehen ist, ermittelt. Dieses Beförderungsentgelt reicht aus für jeden Gegenstand bis zu einer maximalen Masse. Als Mess-Bereich wird der Bereich bis zu dieser maximalen Masse, evtl. verringert oder vergrößert um eine Toleranz, verwendet. Dadurch wird die Anzahl derjenigen Gegenstände, die gewogen werden, verringert. Ein Gegenstand mit einem hohen Beförderungsentgelt wird nur dann gewogen, wenn der Wert der weiteren Messgröße auch im Verhältnis zum hohen Beförderungsentgelt noch hoch erscheint.

Gemäß einer Ausgestaltung befindet sich im ersten Transportpfad zwischen dem Verzweigungspunkt und der Waage ein Pufferspeicher, welcher mindestens einen, bevorzugt mehrere zu wiegende Gegenstände zeitweise zu speichern vermag. Der erste Transportpfad transportiert Gegenstände vom Verzweigungspunkt zum Pufferspeicher und anschließend vom Pufferspeicher zur Waage. Dadurch schwankt die Anzahl von Gegenständen, die pro Zeiteinheit die Waage erreichen, weniger stark. Die unerwünschte Situation tritt seltener auf, dass ein Rückstau von zu wiegenden Gegenständen bis über den Verzweigungspunkt hinaus auftritt und später die Waage "nichts zu tun hat", nachdem die Waage den Rückstau abgearbeitet hat.

In einer Ausführungsform lässt sich die Geschwindigkeit des ersten Transportpfads verändern, z. B. in Abhängigkeit von der Auslastung der Waage. Dadurch fungiert der erste Transportpfad der veränderlichen Transportgeschwindigkeit selber als Pufferspeicher. In einer anderen Ausführungsform ist ein eigener Pufferspeicher vorgesehen, durch den hindurch die Gegenstände langsamer transportiert werden als über den ersten Transportpfad. In dieser Ausführungsform ist es nicht erforderlich, dass die Transportgeschwindigkeit des ersten Transportpfades sich verändern lässt.

Im Folgenden wird die Erfindung anhand eines Ausführungsbeispiels beschrieben. Dabei zeigen:
- Fig. 1: schematisch die lösungsgemäße Vorrichtung des Aus- führungsbeispiels;
- Fig. 2: ein Flussdiagramm zur Durchführung des lösungsgemä- ßen Verfahrens.

Im Ausführungsbeispiel wird die Erfindung auf flache Postsendungen angewendet, z. B. Standardbriefe, Großbriefe, Kataloge und Postkarten.

Fig. 1 zeigt schematisch die lösungsgemäße Vorrichtung des Ausführungsbeispiels. Transportpfade für Postsendungen sind durch durchgezogene Linien angedeutet, Datenverbindungen durch gestrichelte Linien. Fig. 2 zeigt ein Flussdiagramm zur Durchführung des lösungsgemäßen Verfahrens.

Im Ausführungsbeispiel umfasst die lösungsgemäße Vorrichtung
- eine geeichte Waage 1,
- eine weitere Messeinrichtung 2,
- einen Verzweigungspunkt mit einer Weiche 3,
- einen Vereinigungspunkt 4,
- eine Auswerte- und Steuerungseinheit 5,
- eine Kamera 6,
- einen Zuführ-Transportpfad TZ,
- einen ersten Transportpfad T1,
- einen zweiten Transportpfad T2,
- einen Wegführ-Transportpfad TW,
- einen Bereichs-Datenspeicher B-DS und
- einen Datenspeicher M-DS für gemessene Massewerte.

Die weitere Messeinrichtung 2 befindet sich im Zuführ-Transportpfad TZ. Mess-Signale von der weiteren Messeinrichtung 2 werden zur Auswerte- und Steuerungseinheit 5 übermittelt. Die Auswerte- und Steuerungseinheit 5 steuert abhängig von diesen Signalen die Weiche 3 an.

Sowohl der erste Transportpfad T1 als auch der zweite Transportpfad T2 beginnen im Verzweigungspunkt mit der Weiche 3 und enden im Vereinigungspunkt 4. Die Waage 1 befindet sich im ersten Transportpfad T1. Der zweite Transportpfad T2 führt an der Waage 1 vorbei. Im Vereinigungspunkt 4 beginnt der Wegführ-Transportpfad TW.

Die Postsendungen werden von einem Vereinzeler ("singulator") vereinzelt. Der Vereinzeler bildet einen Strom von zueinander beabstandeten Postsendungen. Vorzugsweise werden die flachen Postsendungen aufrecht stehend transportiert.

Flussabwärts vom Vereinzeler befindet sich die Vorrichtung, die in Fig. 1 schematisch gezeigt wird. Die Postsendungen durchlaufen diese Vorrichtung in die Transportrichtung T.

Die weitere Messeinrichtung 2 misst für jede Postsendung, welchen Wert eine weitere Messgröße für diese Postsendung annimmt. Diese weitere Messgröße ist für jede Postsendung dieselbe. Möglich ist, dass die weitere Messeinrichtung 2 für jede Postsendung jeweils mehrere weitere Messgrößen misst.

In einer Ausführungsform werden die Postsendungen im Vereinzeler oder hinter dem Vereinzeler beschleunigt. Möglich ist auch, dass die Postsendung beim weiteren Transport beschleunigt oder abgebremst wird, z. B. um die Richtung zu ändern oder gar umzukehren. Eine solche Vorrichtung, um die Transportrichtung einer Postsendung umzukehren, ist z. B. aus DE 4345160 C2 oder aus DE 4315053 C2 bekannt.

In einer Ausgestaltung dieser Ausführungsform übt eine Fördereinrichtung, die aus mehreren Endlos-Förderbändern besteht, eine vorgegebene Kraft auf die Postsendung auf. Die weitere Messeinrichtung 2 misst, welche Beschleunigung die Postsendung jeweils ausführt. Diese Beschleunigung ist idealerweise proportional zur Masse der Postsendung. Messfehler und Störeinflüsse führen dazu, dass die Beschleunigung tatsächlich nur annähernd proportional zur Masse ist und die Beschleunigung nur näherungsweise gemessen wird.

In einer weiteren Ausführungsform wird die Dicke oder die Länge oder die Höhe jeder Postsendung gemessen. In der Regel ist eine Postsendung umso dicker, länger und höher, je schwerer sie ist. Vorzugsweise wird ein rechnerverfügbares Abbild der Postsendung erzeugt, z. B. von der Kamera 6. Die Kontur der Postsendung in diesem Abbild wird vermessen, um daraus die Dicke / Höhe / Länge der Postsendung zu berechnen.

In einer Fortbildung werden alle drei Abmessungen der Postsendung gemessen, und aus den Abmessungen wird das Volumen der Postsendung berechnet, und zwar näherungsweise als Produkt aus Dicke, Höhe und Länge.

Die Mess-Signale der weiteren Messeinrichtung 2 werden zur Auswerte- und Steuerungseinheit 5 übermittelt.

In einem Bereichs-Datenspeicher B-DS der Auswerte- und Steuerungseinheit 5 sind eine rechnerverfügbare Beschreibung eines Mess-Bereichs und die eines Masse-Bereichs abgespeichert. Dieser Mess-Bereich ist eine Teilmenge des Wertebereichs der weiteren Messgröße. Der Masse-Bereich ist eine Teilmenge des Wertebereichs der möglichen Massen (Massewerte) von Postsendungen.

In einer Ausführungsform wird der Mess-Bereich fest vorgegeben, z. B. so, dass für jede Standard-Postsendung die weitere Messgröße einen Wert annimmt, der in diesen Mess-Bereich fällt. Als Masse-Bereich wird in einer Ausgestaltung der Bereich der möglichen Massen von Standard-Postsendungen vorgegeben, bevorzugt vergrößert um eine Toleranz für Messungenauigkeiten.

In einer anderen Ausführungsform werden die Postsendungen an der Kamera 6 vorbeigeführt, bevor die Postsendungen den Verzweigungspunkt mit der Weiche 3 erreichen. Die Kamera erzeugt jeweils ein Abbild von der Postsendung. Die Auswerte- und Steuerungseinheit 5 oder eine andere Auswerte- und Steuerungseinheit stellt fest, ob im Abbild eine Kennung eines Beförderungsentgelts gezeigt wird, z. B. eine Briefmarke oder ein sonstiger Freimachungsvermerk. Möglich ist, dass der Freimachungsvermerk eine Kennung für die Postsendung oder für eine Menge von Postsendungen enthält und dass diese Kennung gelesen und entziffert wird. Möglich ist, dass die Auswerteund Steuerungseinheit 5 in einem Datenspeicher mit entrichteten Beförderungsentgelten nach der Kennung sucht und feststellt, welches Beförderungsentgelt entrichtet wurde.

Die Auswerte- und Steuerungseinheit 5 ermittelt das Beförderungsentgelt. Berechnet wird, für welchen maximalen Wert der weiteren Messgröße dieses Beförderungsentgelt ausreicht. Als Mess-Bereich wird der Bereich bis zu diesem Wert, vergrößert um eine Toleranz, verwendet.

Weiterhin wird berechnet, für welche maximale Masse dieses Beförderungsentgelt ausreicht. Die Auswerte- und Steuerungseinheit 5 wertet vorzugsweise eine rechnerverfügbare Tabelle für Beförderungsentgelte aus. Als Masse-Bereich wird der Bereich bis zu dieser maximalen Masse verwendet. Der dergestalt berechnete Mess-Bereich und der dergestalt berechnete Masse-Bereich werden im Bereichs-Datenspeicher B-DS abgespeichert.

Die weitere Messeinrichtung 2 misst, welchen Wert die weitere Messgröße für eine Postsendung annimmt (Schritt S2 von Fig. 2), was das Ergebnis E1 liefert. Die Auswerte- und Steuerungseinheit 5 erhält die Mess-Signale von der weiteren Messeinrichtung 2 und liest den Bereichs-Datenspeicher B-DS mit dem Mess-Bereich und dem Masse-Bereich aus. Die Auswerte- und Steuerungseinheit 5 entscheidet, ob der gemessene Wert der weiteren Messgröße im Mess-Bereich oder außerhalb des MessBereichs liegt (Entscheidung A1 von Fig. 2).

Falls der Messwert E1 im Mess-Bereich liegt, so entscheidet die Auswerte- und Steuerungseinheit 5 automatisch, dass die Masse der Postsendung im Masse-Bereich liegt (Ergebnis E2). Die Auswerte- und Steuerungseinheit 5 steuert die Wiche 3 im Verzweigungspunkt so an, dass die Weiche 3 die Postsendung, deren Messwert im Mess-Bereich liegt, in den zweiten Transportpfad T2 umlenkt. Der zweite Transportpfad T2 transportiert die Postsendung an der Waage 1 vorbei zum Vereinigungspunkt 4 (Schritt S6). Diese Postsendung wird somit nicht gewogen. Der Zweig "Ja", der von A1 in Fig. 2 ausgeht, wird durchlaufen.

Falls der gemessene Wert der weiteren Messgröße außerhalb desjenigen Mess-Bereichs liegt, der im Bereichs-Datenspeicher B-DS abgespeichert ist, so wird der Zweig "Nein" von Fig. 2 durchlaufen. Die Auswerte- und Steuerungseinheit 5 steuert die Weiche 3 so an, dass die Weiche 3 die Postsendung in den ersten Transportpfad T1 leitet. Der erste Transportpfad T1 transportiert die Postsendung zur Waage 1 (Schritt S3).

Die Waage 1 ist geeicht. Die Waage 1 wiegt die zugeführte Postsendung (Schritt S1). Waagen zum Wiegen von Postsendungen sind z. B. aus US 20080314651 A1, DE 102007021393 A1,

DE 102005055753 B4, US 20090057034 A1 und EP 2036621 A1 bekannt. In einer Ausgestaltung durchläuft die Postsendung eine Beruhigungszone, bevor sie die Waage 1 erreicht. Eine solche Ausgestaltung ist z. B. aus EP 2040049 A1 bekannt.

Die gewogene Postsendung wird auf dem ersten Transportpfad T1 zum Vereinigungspunkt 4 transportiert (Schritt S4). Vom Vereinigungspunkt 4 transportiert der Wegführ-Transportpfad TW die Postsendung ab.

Das Mess-Signal, das die gewogene Masse der Postsendung beschreibt, wird an die Auswerte- und Steuerungseinheit 5 übermittelt. Die Auswerte- und Steuerungseinheit 5 vergleicht die gemessene Masse der Postsendung mit dem Masse-Bereich, der im Bereichs-Datenspeicher B-DS abgespeichert ist (Verzweigungspunkt A2 von Fig. 2). Falls die gemessene Masse im Masse-Bereich liegt (Zweig "Ja"), so ist das Ergebnis E2 von Fig. 2 erreicht.

Falls die gemessene Masse hingegen außerhalb des Masse-Bereichs liegt, so ist das Ergebnis E2 von Fig. 2 erzielt. Möglicherweise wurde ein zu geringes Beförderungsentgelt entrichtet. In einem Massewerte-Datenspeicher M-DS wird ein Datensatz für diese Postsendung angelegt (Schritt S5). Dieser Datensatz umfasst im Ausführungsbeispiel
- eine Kennung für die Postsendung, z. B. diejenige Kennung, die im Freimachungsvermerk enthalten ist,
- diejenige Masse, die die geeichte Waage 1 gemessen hat,
- eine Kennzeichnung des ermittelten Beförderungsentgelts, das tatsächlich entrichtet wurde, und
- bevorzugt ein Abbild der Postsendung.

Der Datensatz wird bevorzugt dergestalt im Massewerte-Datenspeicher M-DS abgespeichert, dass der Datensatz gegen Manipulationen gesperrt ist. Damit eignet sich der Datensatz als Nachweis des zu geringen Beförderungsentgelts.

### Bezugszeichenliste

| *Bezugszeichen* | *Bedeutung* |
|---|---|
| 1 | Waage |
| 2 | weitere Messeinrichtung |
| 3 | Weiche im Verzweigungspunkt |
| 4 | Vereinigungspunkt |
| 5 | Auswerte- und Steuerungseinheit |
| 6 | Kamera |
| A1 | Entscheidung, ob der Wert der weiteren Messgröße innerhalb oder außerhalb des vorgegebenen Mess-Bereichs liegt |
| A2 | Entscheidung, ob die gemessene Masse innerhalb oder außerhalb des vorgegebenen Masse-Bereichs liegt |
| B-DS | Bereichs-Datenspeicher der Auswerte- und Steuerungseinheit 5 |
| E1 | Ergebnis: gemessener Wert der weiteren Messgröße |
| E2 | Ergebnis: Masse der Postsendung liegt im Masse-Bereich |
| E3 | Ergebnis: Masse der Postsendung liegt außerhalb des Masse-Bereichs |
| M-DS | Datenspeicher für gemessene Massewerte |
| S1 | Wiegen der Postsendung durch die Waage 1 |
| S2 | Messen, welchen Wert die weitere Messgröße für eine Postsendung annimmt |
| S3 | Transportieren der Postsendung zur Waage 1 |
| S4 | Transportieren der gewogenen Postsendung auf dem ersten Transportpfad T1 zum Vereinigungspunkt 4 |
| S5 | Erzeugen eines Datensatzes für die gewogene Postsendung im Massewerte-Datenspeicher M-DS |
| S6 | Transportieren die Postsendung an der Waage 1 vorbei zum Vereinigungspunkt 4 |
| T | Transportrichtung |
| T1 | erster Transportpfad; auf ihm ist die Waage 1 gelegen |
| T2 | zweiter Transportpfad, führt an der Waage 1 vorbei |
| TW | Wegführ-Transportpfad |
| TZ | Zuführ-Transportpfad |

## Patentansprüche

1. Vorrichtung, die
- eine Waage (1),
- einen ersten Transportpfad (T1),
- einen zweiten Transportpfad (T2) und
- einen Verzweigungspunkt (3)
umfasst, wobei
die Waage (1)
- sich im ersten Transportpfad (T1) befindet und
- dazu ausgestaltet ist, einen Gegenstand zu wiegen, sowohl der erste Transportpfad (T1) als auch der zweite Transportpfad (T2) vom Verzweigungspunkt (3) abzweigen und
die Vorrichtung dazu ausgestaltet ist,
- einen Gegenstand zum Verzweigungspunkt (3) zu transportieren und
- entweder in den ersten Transportpfad (T1) zu leiten und auf dem ersten Transportpfad (T1) zur Waage (1) zu transportieren oder
- in den zweiten Transportpfad (T2) zu leiten und auf dem zweiten Transportpfad (T2) und an der Waage (1) vorbei zu transportieren,
**dadurch gekennzeichnet, dass**
die Vorrichtung für die automatische Entscheidung ausgestaltet ist, ob die Masse eines Gegenstands innerhalb eines vorgegebenen Masse-Bereichs liegt oder nicht,
wobei die Vorrichtung zusätzlich
- eine weitere Messeinrichtung (2) und
- eine Auswerte- und Steuerungseinheit (5) umfasst,
die weitere Messeinrichtung (2) dazu ausgestaltet ist zu messen, welchen Wert mindestens eine weitere physikalische Messgröße für den Gegenstand annimmt,
wobei die weitere Messgröße mit der Masse zusammenhängt die Auswerte- und Steuerungseinheit (5) dazu ausgestaltet ist zu entscheiden, ob der Wert, den die weitere Messeinheit (2) für einen Gegenstand gemessen hat, innerhalb oder außerhalb eines vorgegebenen Mess-Bereichs liegt, und
die Vorrichtung dazu ausgestaltet ist,
dann, wenn der Messgrößen-Wert außerhalb des vorgegebenen Mess-Bereichs liegt, den Gegenstand auf den ersten Transportpfad (T1) zu leiten und
dann, wenn der Messgrößen-Wert innerhalb des Messbereichs liegt, die Schritte durchzuführen, dass
- der Gegenstand auf den ersten Transportpfad (T1) geleitet wird,
- der erste Transportpfad (T1) den Gegenstand zur Waage (1) transportiert und
- die Waage (1) den Gegenstand wiegt
dann, wenn der Messgrößen-Wert innerhalb des Messbereichs liegt, die Schritte durchzuführen, dass
- der Gegenstand auf den zweiten Transportpfad (T2) geleitet wird,
- der zweite Transportpfad den Gegenstand an der Waage (1) vorbeitransportiert und
- die Auswerte- und Steuerungseinheit (5) entscheidet, dass die Masse des Gegenstands im vorgegebenen Masse-Bereich liegt.

2. Vorrichtung nach Anspruch 1,
**dadurch gekennzeichnet, dass**
die Vorrichtung zusätzlich
- einen Vereinigungspunkt (4) und
- einen dritten Transportpfad (TW)
umfasst,
der erste Transportpfad (T1) und der zweite Transportpfad (T2) im Vereinigungspunkt (4) zusammenlaufen,
im Vereinigungspunkt (4) der dritte Transportpfad (TW) beginnt,
die Vorrichtung dazu ausgestaltet ist,
- den Gegenstand abhängig vom Messgrößen-Wert entweder auf dem ersten Transportpfad (T1) oder auf dem zweiten Transportpfad (T2) zum Vereinigungspunkt (4) zu transportieren und
- den Gegenstand auf dem dritten Transportpfad (TW) vom Vereinigungspunkt (4) weg zu transportieren.

3. Vorrichtung nach Anspruch 1 oder Anspruch 2,
**dadurch gekennzeichnet, dass**
die weitere Messeinrichtung dazu ausgestaltet ist, mindestens eine der folgenden Messgrößen zu messen:
- die Beschleunigung, die der Gegenstand ausführt, wenn der Gegenstand in eine Transportrichtung (T) transportiert wird und während des Transports eine vorgegebene oder gemessene Kraft auf ihn ausgeübt wird,
- mindestens eine Abmessung des Gegenstands,
- das Volumen des Gegenstands.

4. Verfahren,
welches die Schritte umfasst, dass
- ein Gegenstand zu einem Verzweigungspunkt (3) transportiert wird und
- der Gegenstand vom Verzweigungspunkt (3) entweder in einem ersten Transportpfad (T1) oder in einem zweiten Transportpfad (T2) geleitet wird,
wobei dann, wenn der Gegenstand in den ersten Transportpfad (T1) geleitet wird,
- der Gegenstand auf dem ersten Transportpfad (T1) zur Waage (1) transportiert wird und
- die Waage (1) den Gegenstand wiegt und
dann, wenn der Gegenstand in den zweiten Transportpfad (T2) gelenkt wird,
- der Gegenstand auf dem zweiten Transportpfad (T2) an
der Waage (1) vorbeitransportiert wird,
**dadurch gekennzeichnet, dass**
durch das Verfahren automatisch entschieden wird, ob die Masse des Gegenstands innerhalb eines vorgegebenen Masse-Bereichs liegt oder nicht,
wobei das Verfahren zusätzlich die Schritte umfasst, dass
gemessen wird, welchen Wert mindestens eine weitere physikalische Messgröße für den Gegenstand annimmt (Schritt S2),
wobei die weitere Messgröße mit der Masse zusammenhängt und
automatisch entscheiden wird, ob der Wert der weiteren Messgröße innerhalb oder außerhalb eines vorgegebenen Mess-Bereichs liegt (A1),
dann, wenn der Messgrößen-Wert außerhalb des MessBereichs liegt,
- der Gegenstand in den ersten Transportpfad (T1) geleitet wird und
- die Waage (1) den Gegenstand wiegt und
dann, wenn der Messgrößen-Wert innerhalb des vorgegebenen Messbereichs liegt,
- der Gegenstand auf dem zweiten Transportpfad (T2) an der Waage (1) vorbeitransportiert wird und
- automatisch entschieden wird, dass die Masse des Gegenstands im vorgegebenen Masse-Bereich liegt (E2).

5. Verfahren nach Anspruch 4,
**dadurch gekennzeichnet, dass**
der erste Transportpfad (T1) und der zweite Transportpfad (T2) in einem Vereinigungspunkt (4) zusammenlaufen,
im Vereinigungspunkt (4) ein dritter Transportpfad (TW) beginnt,
der Gegenstand abhängig vom Messgrößen-Wert entweder auf dem ersten Transportpfad (T1) oder auf dem zweiten Transportpfad (T2) zum Vereinigungspunkt (4) transportiert wird und
der Gegenstand auf dem dritten Transportpfad (TW) vom Vereinigungspunkt (4) weg transportiert wird.

6. Verfahren nach Anspruch 4 oder Anspruch 5,
**dadurch gekennzeichnet, dass**
- der Gegenstand vor Erreichen des Verzweigungspunkts (3) mindestens einmal transportiert wird,
- während des Transports eine vorgegebene oder gemessene Kraft auf ihn ausgeübt wird
- die Beschleunigung, die der Gegenstand aufgrund der Krafteinwirkung ausführt, gemessen und als der Wert der weiteren Messgröße verwendet wird.

7. Verfahren nach Anspruch 6,
**dadurch gekennzeichnet, dass**
die Messung der Beschleunigung ausgeführt wird,
während die Transportrichtung (T), in die der Gegenstand transportiert wird, geändert wird.

8. Verfahren nach einem der Ansprüche 4 bis 7,
**dadurch gekennzeichnet, dass**
ermittelt wird, welches Beförderungsentgelt für den Transport des Gegenstands entrichtet wurde, und
der Mess-Bereich für die Entscheidung in Abhängigkeit vom Beförderungsentgelt ermittelt wird.

9. Verfahren nach Anspruch 8,
**dadurch gekennzeichnet, dass**
die Ermittlung des entrichteten Beförderungsentgelts die Schritte umfasst, das
- ein Abbild des Gegenstands erzeugt wird,
- durch Auswertung des Abbilds eine auf dem Gegenstand angebrachte Kennung für ein Beförderungsentgelt zum Transport des Gegenstands ermittelt wird und
- das Beförderungsentgelt durch Auswertung der Kennung im Abbild ermittelt wird.
